**Europäisches Patentamt**

**European Patent Office**

**Office européen des brevets**

(19)

(11) Veröffentlichungsnummer : **0 443 188 B1**

(12) **EUROPÄISCHE PATENTSCHRIFT**

(45) Veröffentlichungstag der Patentschrift :
**02.03.94 Patentblatt 94/09**

(51) Int. Cl.⁵ : **B66B 1/20**

(21) Anmeldenummer : **90125174.4**

(22) Anmeldetag : **21.12.90**

(54) **Verfahren und Einrichtung zur sofortigen Zielrufzuteilung bei Aufzugsgrupppen, aufgrund von Bedienungskosten und von variablen Bonus-/Malus-Faktoren.**

(30) Priorität : **22.02.90 CH 570/90**

(43) Veröffentlichungstag der Anmeldung :
**28.08.91 Patentblatt 91/35**

(45) Bekanntmachung des Hinweises auf die
Patenterteilung :
**02.03.94 Patentblatt 94/09**

(84) Benannte Vertragsstaaten :
**AT BE CH DE DK ES FR GB IT LI NL SE**

(56) Entgegenhaltungen :
**EP-A- 0 030 823**

(56) Entgegenhaltungen :
**EP-A- 0 246 395**
**EP-A- 0 342 008**
**GB-A- 2 110 423**
**GB-A- 2 214 662**

(73) Patentinhaber : **INVENTIO AG**
**Seestrasse 55**
**CH-6052 Hergiswil NW (CH)**

(72) Erfinder : **Schröder, Joris, Dr.**
**Schädrütihalde 2**
**CH-6006 Luzern (CH)**
Erfinder : **Friedli, Paul, Dr.**
**Lindenweg 2**
**CH-5453 Remetschwil (CH)**

EP 0 443 188 B1

Jouve, 18, rue Saint-Denis, 75001 PARIS

## Beschreibung

Die Erfindung bezieht sich auf ein Verfahren und eine Einrichtung zur sofortigen Zielrufzuteilung bei Aufzugsgruppen, bei dem mit auf Stockwerken angeordneten Rufregistriereinrichtungen Zielrufe nach gewünschten Zielstockwerken eingegeben werden können, wobei diese Zielrufe mit einem, Mikroprozessor-gestützten, übergeordneten Zielruf-Zuteilungsalgorithmus, unmittelbar nach Rufeingabe, den einzelnen Aufzügen der Aufzugsgruppe sofort zugeteilt werden und diese Zuteilungen auf den entsprechenden Rufregistriereinrichtungen sofort angezeigt werden, wobei ein untergeordneter Kostenberechnungs-Algorithmus für jeden Aufzug und für jeden Zielruf aus aufzugsspezifischen Daten den Wartezeiten und sonstigen Verlustzeiten von Fahrgästen entsprechende als mehrteilige Summe von Bedienungsteilkosten ausgebildete Bedienungskosten errechnet, und wobei dann für jeden Zielruf die Bedienungskosten aller Aufzüge miteinander verglichen werden und ein Zielruf demjenigen Aufzug sofort definitiv zugeteilt wird, der die kleinsten entsprechenden Bedienungskosten aufweist.

Mit solchen Verfahren wird die Zuteilung von Zielrufen zu Aufzügen im Sinne eines speziellen, von der Aufzugsgruppe zu erbringenden Funktionsverhaltens vorgenommen. Eine solche Zuteilung kann beeinflusst werden, indem man einzelne oder mehrere oder alle Summanden der Kostenrechnung modifiziert, um so die Verkehrsabwicklung nach speziellen Kriterien zu verbessern.

Bei modernen Steuerungen für Aufzugsgruppen erfolgt die Zuteilung von Stockwerk- und Zielrufen zu den einzelnen Aufzügen in Abhängigkeit von gruppenspezifischen, den Betriebsstatus einer Aufzugsgruppe darstellenden Faktoren.

Dieser Bezug auf den im Zeitpunkt der Rufzuteilung herrschenden Betriebsstatus erlaubt eine bessere Anpassung der Rufzuteilung an das wechselnde Verkehrsgeschehen und erhöht zudem die Verkehrsleistung. So ist aus der CH-Patentanmeldung Nr. 03-275/88-5 eine Gruppensteuerung für Aufzüge mit Sofortzuteilung von Zielrufen bekannt geworden, bei der Zielrufe nach dem Oberbegriff des Anspruches 1 unmittelbar nach Registrierung sofort einem Aufzug zur Bedienung zugeteilt werden und zwar aufgrund des für eine Rufbedienung durch einen Aufzug notwendigen vom momentanen Betriebsstatus der Aufzugsgruppe abhängigen Aufwandes. Als Aufwand gilt die für jeden Aufzug separat berechnete, Bedienungskosten genannte Verlustzeitsumme, welche die Gesamtheit aller Verkehrsteilnehmer wegen der betreffenden Rufbedienung erleiden muss. Im Rahmen eines Zielruf-Zuteilungsalgorithmus (ZZA) werden diese Bedienungskosten $K_{NR}$ nach einer speziellen Kostenformel für jeden Aufzug und für jeden Zielruf berechnet und in einem Komparator rufweise verglichen und der Ruf nachfolgend demjenigen Aufzug definitiv zugeteilt, der die geringsten Bedienungskosten aufweist. Zur Ermittlung der Bedienungskosten $K_{NR}$ werden dieselben, nach den Verkehrsteilnehmern bei denen sie anfallen in Rufkosten ($K_{rs}+K_{rz}$) Passagierkosten ($K_{ps}$; $K_{pz}$) und Wartekosten ($K_{ws}$; $K_{wz}$) aufgeteilt und durch folgende Summe dargestellt:

$$K_{NR} = (K_{rs} + K_{rz}) + (K_{ps} + K_{pz}) + (K_{ws} + K_{wz})$$

Dabei entsprechen die Rufkosten ($K_{rs}+K_{rz}$) den Verlustzeiten der den betreffenden Zielruf benützenden Verkehrsteilnehmer; die Passagierkosten ($K_{ps}+K_{ps}$) den Verlustzeiten der den betreffenden Zielruf nicht benützenden Passagieren in der Kabine und die Wartekosten ($K_{ws}+K_{wz}$) den Verlustzeiten der den betreffenden Zielruf nicht benützenden, gebuchten, späteren Zusteiger auf den Stockwerken.

Die Faktoren, welche die einzelnen Summanden bilden betreffen Zeitperioden und Passagierzahlen und reflektieren den jeweiligen Betriebsstatus der Aufzugsgruppe. Als Folge dieser relativen Statusfaktoren ist auch die Zielrufzuteilung relativ, nämlich abhängig von und bezogen auf den momentanen Betriebsstatus der Aufzugsgruppe im Zeitpunkt der Rufzuteilung. Obwohl eine solche, nach relativen Zuteilungskriterien ermittelte Zielrufzuteilung einen Fortschritt darstellt, haften ihr doch gewisse Nachteile an: Diese Nachteile ergeben sich im wesentlichen aus dem Umstande, dass eine Zielrufzuteilung aufgrund der vorgenannten Kostenformel die Zielrufe nicht in allen Fällen im Sinne des geforderten Funktionsverhaltens moderner Aufzugsgruppen zuteilt. Ein erster Nachteil ist darin zu sehen, dass ergonomische Funktionsanforderungen die z.B. das gewohnheitsmässige, akzeptierte Verhalten der Aufzugsbenützer betreffen, mit einer Verlustzeitminimierung nicht erfasst werden können. So werden z.B. drei "gleichzeitig" eingegebene, identische Zielrufe auf drei im gleichen Betriebsstatus und im gleichen Stockwerk parkierte Aufzüge verteilt. Dies ist vom Verlustzeitstandpunkt aus richtig: würden nämlich alle drei Personen in die gleiche Kabine einsteigen ergäbe sich, gegenüber bloss einem Zusteiger, eine dreimal längere Türoffenhaltezeit, welche alle drei Personen erleiden müssten. Andererseits ist in diesem Falle das Verlustzeit minimierende Verhalten der Aufzugsgruppe für die Fahrgäste unverständlich oder gar irritierend, denn es widerspricht dem Verhalten einer Gruppe von welcher gewohnheitsmässig nur eine Person das Ziel eingibt. Der reine Kostenalgorithmus macht nicht das, was diese Gruppe tatsächlich tun will, nämlich als "Gruppe fahren". Im weiteren wird durch die gleichzeitige Belegung der drei Aufzüge in der gleichen Richtung das Zielstockwerk für die Gegenrichtung gesperrt. Ein zweiter Nachteil ergibt sich aus dem Umstande, dass bei einer Zielrufzuteilung aufgrund der vorgenannten Kostenformel die Zielrufe nach bloss einem einzigen Zuteilungskriterium zugeteilt werden; nämlich nach der minimalen Verlustzeit aller Verkehrsteilnehmer. Weitere Funktionsanforderungen an Aufzugsgruppen die als Zuteilungskriterien ebenfalls in eine Zielrufzuteilung aufgenommen werden sollten, müssen dabei unberücksichtigt bleiben. Eine derartige Zielrufzuteilung genügt nur einem Teil der geforderten Gruppenfunktionen und kann deshalb nicht optimal sein. Weiter hat sich als nachteilig erwiesen, dass die Zielrufzuteilung nach CH-03-275/88-5 auf einer geschlossenen Kostenformel beruht, die keine Modifikationen z.B. in Richtung weiterer Zuteilungskriterien zulässt. Gefragt ist ein Zielrufzuteilungs-Algorithmus mit nach Art und Anzahl sich automatisch anpassenden Zuteilungskriterien, Verkehrsarten und Verkehrsintensitäten, also eine Zielrufzuteilung, die für jede Anwendung optimierbar ist.

Hier will die Erfindung Abhilfe schaffen:

Dementsprechend ist es die Aufgabe der antragsgemässen Erfindung, ein Verfahren und eine Einrichtung zur Verfügung zu stellen, um bei Aufzugsgruppen die Zielrufe im Sinne eines vorgegebenen Satzes von Funktionsanforderungen an die Rufbedienung zuzuteilen. Insbesondere soll diese neuartige Zielrufzuteilung auch selektiv auf einzelne dieser Funktionsanforderungen abgestimmt werden können, um diese individuell zu bevorzugen oder individuell zu benachteiligen. Verfahren und Einrichtung sollen weiter so gestaltet sein, dass sie rasch und einfach auf eine Vielzahl von Funktionsanforderungen ausgerichtet werden können und dabei für unterschiedliche Verkehrsarten und Verkehrsintensitäten optimierbar sind. Gelöst wird diese Aufgabe erfindungsgemäss mit den Mitteln, wie sie in den Fassungen der unabhängigen Patentansprüche gekennzeichnet sind. Vorteilhafte Weiterbildungen sind in den abhängigen Ansprüchen angegeben.

Darüber hinaus weisen Verfahren und Einrichtung, die mit diesen Mitteln gestaltet sind, noch verschiedene Vorteile auf:

Ein erster Vorteil kann darin gesehen werden, dass wegen der Flexibilität des für die Berechnung der Bedienungskosten verwendeten Kostenberechnungs-Algorithmus das von Aufzugsgruppen verlangte Funktionsverhalten mit entsprechenden Zielrufzuteilungen in weiten Grenzen implementiert werden kann. Es besteht nämlich die Möglichkeit, die einzelnen Summanden in der Kostenberechnungsformel mit Bonussen / Malussen zu gewichten und damit das erste Funktionsprofil noch besser an ein gefordertes Funktionsprofil anzugleichen. Es betrifft dies z.B. Funktionen, die mit dem persönlichen Verhalten der Aufzugsbenützer in Verbindung stehen und mit den Summanden der Kostenberechnungsformel nicht berücksichtigt werden können. Oder es geht um die Korrektur oder Elimination von Grenzfunktionen, die nur selten auftreten, von den Aufzugsbenützern aber nicht toleriert werden. Ein weiterer Vorteil bezieht sich auf stark unterschiedliche Wartezeiten, was von den Aufzugsbenützern als besonders unangenehm empfunden wird. Durch entsprechende Gewichtung der einzelnen Summanden in der Kostenformel mit den variablen Bonusssen / Malussen können die Wartezeiten reduziert oder zumindest untereinander ausgeglichen werden.

Weiter hat sich als vorteilhaft erwiesen, dass die normalen Koinzidenzen von beliebigen Stockwerkhalten in den Summanden der Kostenberechnungsformel implizit enthalten sind und nicht über die variablen Bonusse / Malusse in die Zielrufzuteilung eingebracht werden müssen. Auch hat sich gezeigt, dass die durch einen Zielruf zum frühest möglichen Zeitpunkt eingegebene, diese Bedienungsanforderung voll definierende Information mit der 6-Summanden-Kostenberechnungsformel optimal genutzt wird und dass mit den variablen Bonussen / Malussen zusätzliche ergonomische und verkehrstechnische Anforderungen berücksichtigt werden können. Dies gewährleistet eine Erleichterung in der Abwicklung des Personenverkehrs und allgemein eine erhöhte Förderleistung.

Die Erfindung ist im folgenden anhand der Beschreibung sowie der Zeichnung beim Betrieb einer Aufzugsgruppe von drei Aufzügen näher erläutert. Das Anwendungsgebiet liegt in der Verwendung eines Industrie-Computers für die Durchführung der Gesamtanlagen-Betriebssteuerung gemäss der Erfindung zur Gewährleistung eines speziellen Betriebsverhaltens der Aufzugsgruppe. Die Verwendung eines Rechners beliebiger Art für die Durchführung einer Gruppensteuerung ist bekannt und in zahlreichen Patentschriften beschrieben. In der lediglich diesen Ausführungsweg der Erfindung darstellenden Zeichnung zeigen:

Fig. 1    Disposition und prinzipieller Aufbau einer aus drei Aufzügen bestehenden Aufzugsgruppe zur Anwendung des erfindungsgemässen Verfahrens,

Fig. 2    eine schematische Darstellung der wichtigsten am Verfahren beteiligten Datenquellen und Datensenken,

Fig. 3    ein Struktogramm des erfindungsgemässen Zielrufzuteilungs-Algorithmus ZZA mit untergeordneten Algorithmen für die Kostenberechnung und die Bonus- / Malus-Nachführung für eine aus drei Aufzügen bestehende Aufzugsgruppe,

Fig. 4    eine Darstellung des Haltanzeigers im Kabinendurchgang zur Durchführung des erfindungsgemässen Verfahrens bei der Anwendung nach Fig. 1.

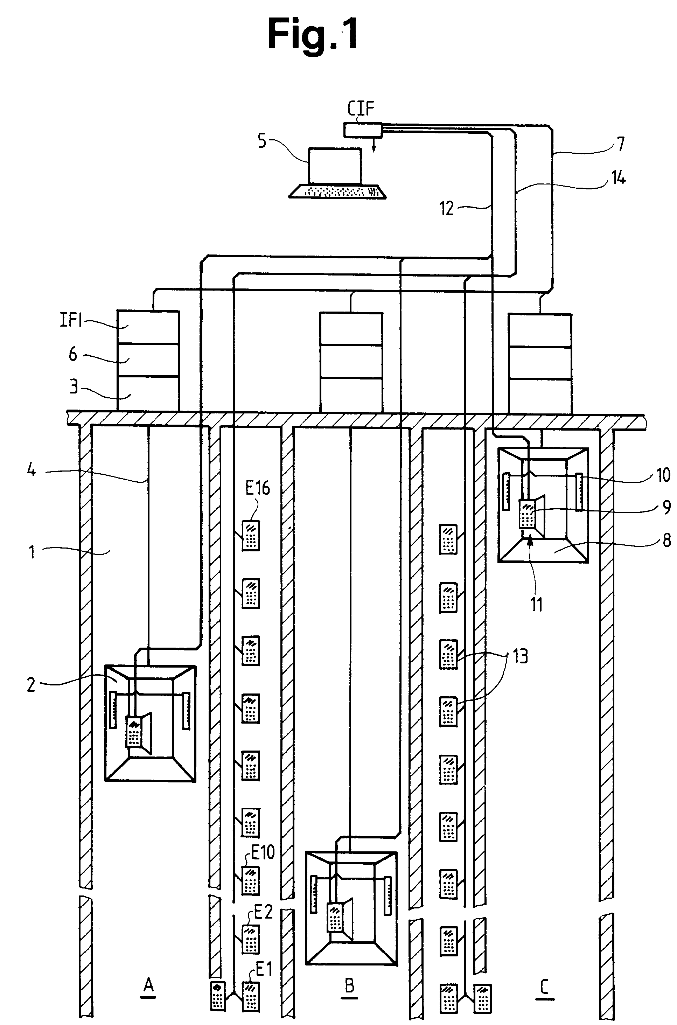

In der Fig. 1 sind mit A,B,C die Aufzüge einer Aufzugsgruppe bezeichnet, wobei bei jedem Aufzug eine in einem Aufzugsschacht 1 geführte Kabine 2 in bekannter Weise von einem Antrieb 3 über ein Förderseil 4 angetrieben wird und 16 Stockwerke $E_1$....$E_{16}$ bedient werden. Jeder Antrieb 3 wird von einer z.B. aus dem europäischen Patent Nr. 0 026 406 bekannten Antriebssteuerung gesteuert, wobei die Sollwerterzeugung, die Regelfunktionen und die Start-Stopeinleitung mittels eines Industrie-Computers 5 realisiert werden, und wobei mit 6 die Mess- und Stellglieder symbolisiert sind, die über ein erstes Interface IF1 und einen Aufzugsbus 7 mit dem Industrie-Computer 5 in Verbindung stehen. Jede Kabine 2 weist eine Lastmesseinrichtung 8, eine den jeweiligen Betriebszustand Z der Kabine signalisierende Einrichtung 9, einen Haltanzeiger 10, und ein Car-Operating-Panel 11 auf. Die Einrichtungen 8, 9, 10, 11 sind über einen Kabinenbus 12 mit dem Industrie-Computer 5 verbunden. Da in den Kabinen 2 keine Kabinenrufknöpfe vorgesehen sind, können auch keine Kabinenrufe eingegeben werden, so dass diese Aufzugsgruppe ohne Kabinenrufe, ausschliesslich mit Zielrufen betrieben wird. Die auf den Stockwerken $E_1$....$E_{16}$ vorgesehenen Zielrufeingabeeinrichtungen sind z.B. als Zehnertastaturen 13 gemäss dem europ. Patent Nr. 0 246 335 ausgebildet. Mit ihnen können Zielrufe nach allen gewünschten Zielstockwerken $E_1$....$E_{16}$ eingegeben werden. Diese Zielrufe werden dann, nach dem erfindungsgemässen Zuteilungsverfahren, das nachfolgend detailliert erläutert wird, einer Kabine 2 zur Bedienung zugeteilt. Die der Zielrufeingabe dienenden Zehnertastaturen 13 sind über einen Stockwerkbus 14 am Industrie-Computer 5 angeschlossen.

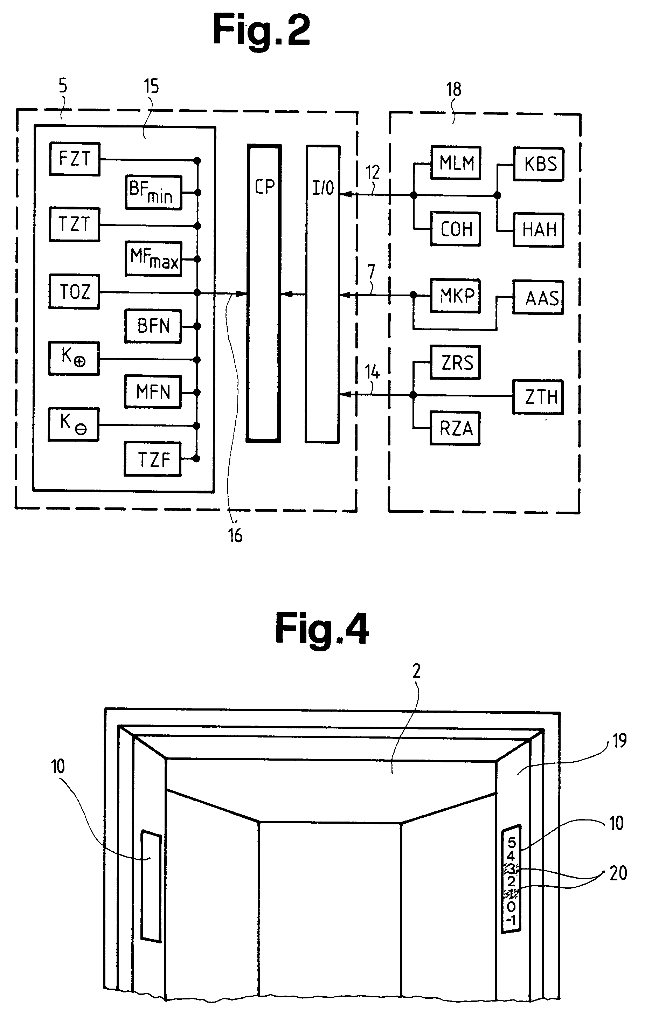

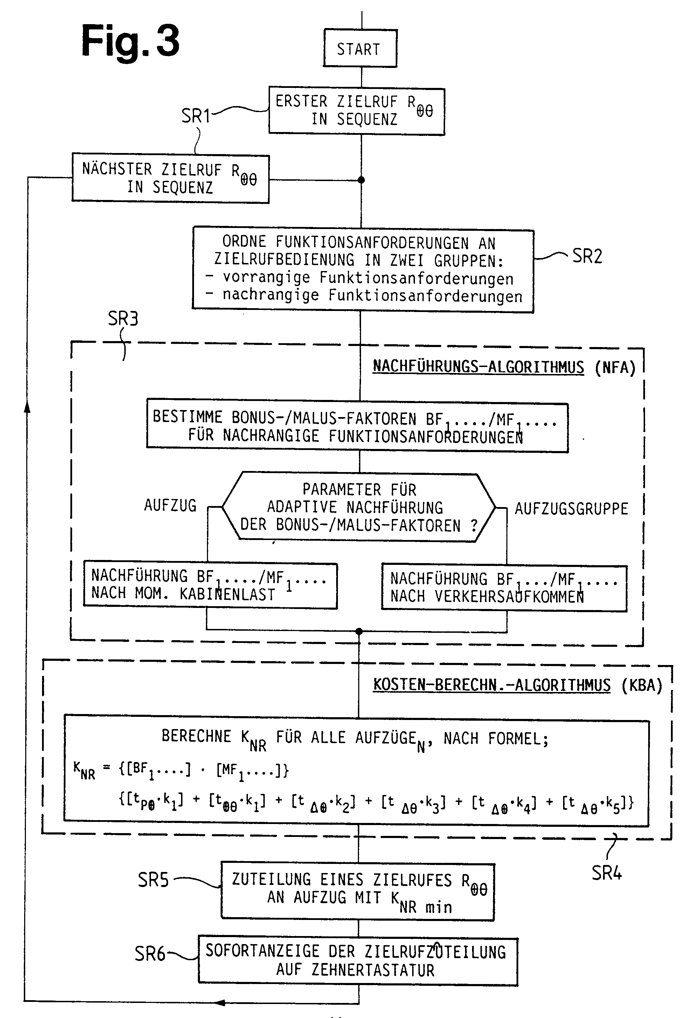

Fig. 2 zeigt in schematischer Darstellung den Industrie-Computer 5 mit den wichtigsten am Verfahren beteiligten Datenquellen und Datensenken, die sich in der Aufzugsanlage 18 oder in einem internen Schreib-/Lesespeicher 15 befinden. In beiden Fällen stehen die Datenquellen und Datensenken bilateral mit dem Prozessor CP des Industrie-Computers 5 in Verbindung, von der Aufzugsanlage 18 aus über ein dreifaches Bussystem 7, 12, 14 und Input-/Output-Elemente I/O; vom Schreib-/Lesespeicher 15 aus über den internen Bus 16. Über den Stockwerkbus 14 werden auf den Stockwerken $E_1$....$E_{16}$ registrierte Zielrufe $R_{\oplus\ominus}$ erfasst ZRE, bereits erfolgte Zielrufzuteilungen auf den entsprechenden Zehnertastaturen 13 angezeigt RZA und alle anderen für das Handling der Zehnertastaturen 13 notwendigen Funktionen ZTH ausgeführt. Der Aufzugsbus 7 dient der Verbindung mit den Antrieben 3 der einzelnen Aufzüge A,B,C. Es geht dabei vor allem um die laufende Erfassung der momentanen Kabinenposition MKP und des Aufzugs-Antriebsstatus AAS zur Verwendung in der Kostenrechnung, sowie um weitere Daten im Zusammenhang mit der Steuerung und Regelung der Antriebe 3. Über den Kabinenbus 12 erfolgt die Erfassung der momentanen Kabinenlast MLM, des Kabinen-Betriebsstatus KBS sowie weiterer Datenquellen und Datensenken COH und HAH im Zusammenhang mit dem Handling des Kabinenpanels 17 bzw. des Haltanzeigers 10.

Zur Implementierung des dem erfindungsgemässen Verfahren zugrunde liegenden Zielrufzuteilungs-Algorithmus ZZA verfügt der Prozessor CP über weitere Datenquellen und Datensenken im Schreib-/Lesespeicher 15. Es handelt sich dabei vor allem um vorgegebene Konstante oder um Statusvariable, die in der Aufzugsanlage gemessen und teilweise auch laufend nachgeführt werden. Zu diesen tabellarisch organisierten Datenquellen und Datensenken gehören die Minimalwerte der Bonusfaktoren $BF_{min}$; die Maximalwerte der Malusfaktoren $MF_{max}$; die numerischen Werte für die Bonusfaktor-Nachführung BFN und die Malusfaktor-Nachführung MFN; die Türzeiten TZT, die Fahrzeiten FZT; die voraussichtliche Anzahl Zusteiger pro Halt $k_\oplus$, die voraussichtliche Anzahl Aussteiger pro Halt $k_\ominus$, sowie die Transferzeit pro Fahrgast TZF.

Fig. 3 zeigt die Struktur und den sequentiellen Ablauf des dem erfindungsgemässen Verfahren zugrunde liegenden Zielrufzuteilungs-Algorithmus ZZA mit seinen zwei untergeordneten Algorithmen für Bonus-/Malus-Nachführung NFA und Kostenberechnung KBA.

Vorerst sei das erfindungsgemässe Verfahren in seiner allgemeinen Form gemäss Anspruch 1 beschrieben; dies als Einleitung zur Verfahrensbeschreibung und zur besseren Übersicht. Die Erfassung der auf Stockwerken $E_1$....$E_{16}$ eingegebenen Zielrufe $R_{\oplus\ominus}$ erfolgt in bekannter Weise durch sequentielle Abtastung aller Zehnertastaturen 13, wobei zuzuteilende Zielrufe $R_{\oplus\ominus}$ als Fahrten von einem Zusteigehalt $\oplus$ nach einem Aussteigehalt $\ominus$ über den Stockwerkbus 14 in den Industrie-Computer 5 eingelesen werden. Im weiteren ist der Industrie-Computer 5 über den Aufzugsbus 7 mit dem Antrieb 3 und über den Kabinenbus 12 mit den Kabinen 2 verbunden. Er kennt deshalb zu jedem Zeitpunkt für jeden Aufzug die Last, die Lage und den Betriebsstatus der Kabine 2, den Betriebsstatus des Antriebes 3 und er besitzt weiter Angaben über das bisherige Verkehrsaufkommen und die momentan gültigen Bonus-/Malus-Faktoren $BF_1$....; $MF_1$.... . Aufgrund dieser Informationen ist es dem erfindungsgemässen Zielrufzuteilungs-Algorithmus ZZA möglich, neu-eingegebene Zielrufe $R_{\oplus\ominus}$ im Sinne vorgegebener Kriterien den Aufzügen A,B,C zuzuteilen, also eine Zielrufzuteilung zu ermitteln, die nach diesen Kriterien optimal ist. Bei diesen Kriterien handelt es sich im wesentlichen um Funktionsanforderungen an die Rufbedienung. Eine solche Zielrufzuteilung erfolgt mit der Verarbeitungsgeschwindigkeit des Industrie-Computers 5 einmal, nach Erfassung des entsprechenden Zielrufes $R_{\oplus\ominus}$ im Rahmen der sequentiellen Zielrufabarbeitung aller Stockwerke; sie ist definitiv und wird sofort auf der zugehörigen Zehnertastatur 13 zur Anzeige gebracht. Grundlage der erfindungsgemässen Zielrufzuteilung sind Bedienungskosten $K_{NR}$, welche in der allgemeinen Form gemäss Anspruch 1 nach folgender Formel berechnet werden:

$$K_{NR} = [(BF_1....)\cdot(MF_1....)]\cdot[K_1 + BF_2\cdot K_2 + MF_2\cdot K_3 + .... + K_n] \quad (I)$$

mit:

BF$_1$....        : variable Bonusfaktoren

MF$_1$....        : variable Malusfaktoren

K$_1$; K$_2$; K$_3$;....K$_n$     : Bedienungsteilkosten

Die variablen Bonus-/Malus-Faktoren wirken als Multiplikatoren je auf einen, auf alle oder auf beliebig viele Summanden der Teilkosten K$_1$; K$_2$....K$_n$. Derart berechnete Bedienungskosten K$_{NR}$ stellen ein Mass dar für die Bedienungsfähigkeit eines Aufzuges A,B,C bezüglich eines Zielrufe R$_{\oplus\ominus}$ und hinsichtlich eines vorgegebenen Funktionsprofiles der Aufzugsgruppe. Ein Zielruf R$_{\oplus\ominus}$ wird dann demjenigen Aufzug A,B,C zur Bedienung zugeteilt, der die grösste Bedienungsfähigkeit besitzt, d.h. die geringsten Bedienungskosten K$_{NR}$ aufweist.

Die bevorzugte, zur Darstellung des erfindungsgemässen Verfahrens gewählte Ausführungsvariante soll nun anhand des Zielrufzuteilungs-Algorithmus ZZA in Fig. 3 im Detail erläutert werden. Dabei ist ein Durchlauf angenommen, wie er für Zielrufe R$_{\oplus\ominus}$ typisch ist. Diese bevorzugte Ausführungsvariante ist dadurch gekennzeichnet, dass die Bedienungsteilkosten K$_1$; K$_2$....K$_n$ auf die in Fahrgastsekunden ausgedrückten Verlustzeiten aller Fahrgäste beschränkt sind, dass nur je ein einziger Bonus/Malus B, M vorgesehen ist, nämlich ein Aussteigekoinzidenz-Bonus B$_{\ominus\ominus}$ und ein Abholfahrt-Malus M$_F$ und dass die entsprechenden Bonus-/Malus-Faktoren BF$_{\ominus\ominus}$ bzw. MF$_F$ in gleicher Weise multiplikativ auf alle Bedienungsteilkosten K$_1$; K$_2$; K$_3$....K$_n$, d.h. auf deren Summe, einwirken. Dies ergibt für die bevorzugte Ausführungsvariante des erfindungsgemässen Verfahrens folgende Bedienungskostenformel:

$$K_{NR} \ = \ [BF_{\ominus\ominus} \cdot MF_F] \cdot [t_{P\oplus} \cdot k_1] + [t_{\oplus\ominus} \cdot k_1] + [t_{\Delta\oplus} \cdot k_2] + [t_{\Delta\ominus} \cdot k_3] + [t_{\Delta\oplus} \cdot k_4] + [t_{\Delta\ominus} \cdot k_5] \qquad (II)$$

In Fig. 3 beginnt das Zuteilungsverfahren mit einem Schritt 1 SR1, wenn ein registrierter noch nicht zugeteilter Zielruf R$_{\oplus\ominus}$ zur Zuteilung in den Industrie-Computer 5 eingelesen wird. Die Bedienung dieses Zielrufes R$_{\oplus\ominus}$ soll nun nach Kriterien erfolgen, die als funktionelle Anforderungen an die Rufbedienung der Zielrufzuteilung vorgegeben und zugrunde gelegt sind. Hierzu werden diese fuktionellen Anforderungen an die Rufbedienung in einem zweiten Schritt SR2 hierarchisch geordnet und dabei in zwei Gruppen aufgeteilt: eine erste Gruppe für vorrangige Funktionsanforderungen und eine zweite Gruppe für nachrangige Funktionsanforderungen. Diese Aufteilung ist erforderlich, weil in der nachfolgend beschriebenen Kostenrechnung nach Schnitt 4 SR4 zwischen diesen beiden Gruppen differenziert wird, indem die vorrangigen Funktionsanforderungen durch Bedienungsteilkosten K$_1$, K$_2$....K$_n$ die nachrangigen Funktionsanforderungen durch Bonus-/Malus-Faktoren BF$_1$....; MF$_1$.... dargestellt sind. Erledigung vom Schritt 2 SR2 führt zum Eintritt in den, dem Zielrufzuteilungs-Algorithmus ZZA untergeordneten Bonus-/Malus-Nachführungsalgorithmus NFA, welcher als Schritt 3 SR3 die Bonus-/Malus-Faktoren BF$_1$....; MF$_1$.... ermittelt und gemäss einer gespeicherten Wertetabelle nach einem Parameter der Aufzugsgruppe oder nach einem Parameter eines einzelnen Aufzuges adaptiv nachführt. In beiden Fällen wird von den möglichen Nachführungsparametern je ein bevorzugtes Beispiel verwendet, nämlich das Verkehrsaufkommen für die Aufzugsgruppe und die Kabinenlast für den einzelnen Aufzug. Ist nun z.B. das momentane Verkehraufkommen klein, werden die Bonusse/Malusse B$_1$....; M$_1$.... erhöht, d.h. die entsprechenden Bonusfaktoren BF$_1$.... reduziert und die entsprechenden Malusfaktoren MF$_1$.... erhöht. Ist dagegen das momentane Verkehrsaufkommen gross, nahe Sättigung, werden die Bonusse/Malusse B$_1$....; M$_1$.... reduziert, d.h. die Bonusfaktoren BF$_1$.... erhöht und die Malusfkatoren MF$_1$.... reduziert. Entspricht schliesslich das momentane Verkehrsaufkommen einem normierten Wert besteht keine Veranlassung, die momentan vorliegenden Bonus-/Malus-Faktoren BF$_1$....; MF$_1$.... zu ändern. Die Werte, um welche die Bonus-/Malus-Faktoren BF$_1$....; MF$_1$.... inkrementiert bzw. dekrementiert werden sind als Erfahrungswerte in Funktion der Verkehrsintensität in einer Tabelle abgespeichert. In analoger Weise werden die Bonus-/Malus-Faktoren BF$_1$....; MF$_1$.... für einen einzelnen Aufzug nach einem seiner Betriebsparameter z.B. nach seiner momentanen Kabinenlast nachgeführt. Im nächsten Schritt 4 SR4 werden die Bedienungskosten K$_{NR}$ berechnet. Diese Kostenberechnung erfolgt mittels des Kostenberechnungs-Algorithmus KBA aufgrund der aktuellen, d.h. nachgeführten Bonus-/Malus-Faktoren BF$_1$....; MF$_1$.... und der vorrangigen Funktionsanforderungen nach der dargestellten Kostenformel II. Gemäss der bevorzugten Ausführungsvariante enthält die Kostenformel II nur je einen einzigen Bonus-/Malus-Faktor BF$_{\ominus\ominus}$; MF$_A$ die beide als Multiplikatoren in gleicher Weise auf die Gesamtheit der, die Verlustzeiten aller Fahrgäste darstellenden, Bedienungsteilkosten einwirken. Diese Kostenberechnung erfolgt nur einmal, nach Registrierung des entsprechenden Zielrufes R$_{\oplus\ominus}$ und ist definitiv. In Schritt 5 SR5 wird der Aufzug A,B,C bestimmt, der den vorliegenden Zielruf R$_{\oplus\ominus}$ zu bedienen hat. Dies erfolgt in bekannter Weise aufgrund der in Schritt 4 SR4 berechneten Bedienungskosten K$_{NR}$ gemäss der im Stand der Technik genannten CH-Patentanmeldung Nr. 03-275/88-5. Hierbei werden die in Schritt 4 SR4 berechneten Bedienungskosten K$_{NR}$ rufweise untereinander verglichen und der Aufzug A,B,C mit den geringsten Bedienungskosten K$_{NR}$ zur Bedienung des Zielrufes R$_{\oplus\ominus}$ bestimmt. Unmittelbar nach Ermittlung einer Zielrufzuteilung erfolgt deren Anzeige im nächsten Schritt 6 SR6. Dabei wird der zur Bedienung bestimmte Aufzug A,B,C auf der Zehnertastatur 13 auf welcher der entsprechende Zielruf R$_{\oplus\ominus}$ eingegeben wurde, zur Anzeige gebracht. In gleicher Weise erfolgt der nächste Durchgang im Zielrufzuteilungs-Algorithmus ZZA zur Zuteilung des näch-

sten Zielrufes $R_{\oplus\ominus}$ in der Sequenz.

In anderer Betrachtungsweise kann gesagt werden, dass im vorliegenden Falle die Zielrufzuteilung im Hinblick auf drei an die Rufbedienung gestellte Funktionsanforderungen vorgenommen wird: "minimale Verlustzeitsumme", "Aussteigekoinzidenz", "keine weitere Rufzuteilung bei Abholfahrt". Diese drei Funktionsanforderungen sind in ihrer Bedeutung aber nicht gleichwertig, sondern hierarchisch in zwei Stufen eingeteilt: "minimale Verlustzeitsumme" in der 1. Prioritätsstufe (vorrangig), "Aussteigekoinzidenz" und "keine weitere Rufzuteilung bei Abholfahrt" in der 2. Prioritätsstufe (nachrangig). Grundsätzlich ist die Aufzugsgruppe in ihrer Förderkapazität so ausgelegt, dass die vorrangige Funktionsanforderung, nämlich ein gutes zeitliches Verhalten in der Verkehrsabwicklung (Verlustzeitsumme $K_v$ in Fahrgastsekunden), bei einem normierten Verkehrsaufkommen gewährleistet ist. Bei geringerem Verkehrsaufkommen ist demnach diese vorrangige Funktionsanforderung mit grosser Reserve erfüllt, so dass zu deren Lasten die nachrangigen Funktionsanforderungen "Aussteigekoinzidenz" und "keine weitere Rufzuteilung bei Abholfahrt" durch Erhöhen des entsprechenden Bonusses $B_{\ominus\ominus}$ bzw. des entsprechenden Malusses $M_F$ gefördert werden können. Solange nämlich die Verlustzeitsumme $K_v$ kleiner ist als das geforderte Minimum kann einem Zielruf $R_{\oplus\ominus}$ durchaus zugemutet werden, auf eine Kabine mit "Aussteigekoinzidenz" und "keine weitere Rufzuteilung bei Abholfahrt" zu "warten", d.h. eine Kabine zu akzeptieren, die ein schlechteres zeitliches Verhalten aufweist, dafür aber die Funktionen "Aussteigekoinzidenz" und "keine weitere Rufzuteilung bei Abholfahrt" besitzt. Bei hohem Verkehrsaufkommen nahe Sättigung und grossen Bonussen/Malussen ist die vorgenannte vorrangige Funktionsanforderung mit grossem Manko nicht erfüllt, so dass zu deren Gunsten die nachrangigen Funktionsanforderungen "Aussteigekoinzidenz" und "keine weitere Rufzuteilung bei Abholfahrt" durch Reduzieren der entsprechenden Bonusse/Malusse $B_{\ominus\ominus}$; $M_F$ gehemmt werden müssen. Solange nämlich die resultierende Verlustzeitsumme $K_v$ grösser ist als das erlaubte Maximum muss einem Zielruf zugemutet werden, eine Kabine zu akzeptieren, welche die Funktionen "Aussteigekoinzidenz" und "keine weitere Rufzuteilung bei Abholfahrt" nicht besitzt, dafür aber ein besseres zeitliches Verhalten aufweist. Schliesslich ist bei einem normierten Verkehrsaufkommen die vorrangige Funktionsanforderung nach Definition erfüllt, während die beiden nachrangigen Funktionsanforderungen über die entsprechenden Bonus-/Malus-Faktoren $BF_{\ominus\ominus}$; $MF_F$ angepasst sind. Es liegt also eine ausgewogene, optimale Abstimmung der vorrangigen und der nachrangigen Funktionsanforderungen vor, weshalb die entsprechenden Bonus-/Malus-Faktoren $BF_{\ominus\ominus}$; $MF_F$ nicht geändert werden dürfen, sondern unverändert in die nächste Kostenberechnung übernommen werden müssen. Fig. 4 zeigt eine Darstellung des Haltanzeigers 10 wie er bei der Zielrufsteuerung zur Information der Fahrgäste vorgesehen ist. Ein Haltanzeiger 10 ist in jeder Kabine 2 beidseits des Kabinentürrahmens 19 angebracht, über Augenhöhe und von innen und aussen sichtbar, um während eines Zusteigehaltes oder während einer Fahrt Zielstockwerke anzuzeigen, welche diesem Aufzug bereits zugeteilt worden sind. Zur Zielanzeige bei einem Zusteigehalt blinken die Ziele der auf dem betreffenden Stockwerk zusteigenden Fahrgäste auf dem Haltanzeiger 10 bis die Türe geschlossen ist, um nachher stabil weiterzuleuchten. Zur Zielanzeige während einer Fahrt beginnt ein Ziel auf dem Haltanzeiger 10 zu blinken, wenn der Selektor auf das entsprechende Stockwerk springt und verlöscht, wenn die Tür sich öffnet.

## Patentansprüche

1. Verfahren zur sofortigen Zielrufzuteilung bei Aufzugsgruppen, aufgrund von Bedienungskosten und variablen Bonus/Malus-Faktoren, bei dem mit auf Stockwerken angeordneten Rufregistriereinrichtungen Zielrufe nach gewünschten Zielstockwerken eingegeben werden können, wobei diese Zielrufe mit einem Mikroprozessor-gestützten, übergeordneten Zielruf-Zuteilungsalgorithmus (ZZA), unmittelbar nach Rufeingabe, den einzelnen Aufzügen der Aufzugsgruppe sofort zugeteilt werden und diese Zuteilungen auf den Rufregistriereinrichtungen sofort angezeigt werden, wobei ein untergeordneter Kosten-Berechnungsalgorithmus (KBA) für jeden Aufzug und für jeden Zielruf aus aufzugsspezifischen Daten den Wartezeiten und sonstigen Verlustzeiten von Fahrgästen entsprechende, als mehrteilige Summe von Bedienungsteilkosten ($K_1$....$K_n$) ausgebildete, Bedienungskosten ($K_{NR}$) errechnet, und wobei dann für jeden Zielruf die Bedienungskosten aller Aufzüge miteinander verglichen werden und ein Zielruf demjenigen Aufzug sofort definitiv zugeteilt wird, der die kleinsten entsprechenden Bedienungskosten ($K_{NR}$) aufweist,
dadurch gekennzeichnet,
   - dass die einer Zielrufzuteilung zugrunde liegenden funktionellen Anforderungen an die Rufbedienung hierarchisch geordnet sind, und hierzu in mindestens zwei Gruppen aufgeteilt werden: in vorrangige Funktionsanforderungen und in nachrangige Funktionsanforderungen,
   - dass in der Kostenrechnung zur Berechnung der Bedienungskosten ($K_{NR}$) die vorrangigen Funktionsanforderungen durch Bedienungsteilkosten ($K_1$....$K_n$), die nachrangigen Funktionsanforderungen durch je einen Bonus-Faktor ($BF_1$....) oder einen Malus-Faktor ($MF_1$....) dargestellt werden,

- dass die Bonusfaktoren ($BF_1$....) und die Malusfaktoren ($MF_1$....) als Multiplikatoren auf die, eine mehrteilige Summe von Summanden bildenden Bedienungsteilkosten ($K_1$....$K_n$) einwirken und von diesen Summanden je mindestens einen, multiplikativ modifizieren,
- dass die Bonusfaktoren ($BF_1$....) und die Malusfaktoren ($MF_1$....) entsprechend der Gewichtung der durch sie dargestellten Funktionsanforderungen je einen Minimalwert $0<BF_{min}<1$ bzw. je einen Maximalwert $MF_{max}>1$ besitzen,
- dass die numerischen Werte der Bonusfaktoren ($BF_1$....) und der Malusfaktoren ($MF_1$....) variabel sind, wobei sie pro Aufzugsgruppe, nach einem Betriebsparameter der Aufzugsgruppe und/oder pro Aufzug (N), nach einem Betriebsparameter des entsprechenden Aufzuges (N) in den Bereichen $BF_{min} \leq BF \leq 1$ bzw. $1 \leq MF \leq MF_{max}$ adaptiv nachgeführt werden.

2. Verfahren nach Anspruch 1,
dadurch gekennzeichnet,
dass zur Berechnung der Bedienungskosten $K_{NR}$ eines Zielrufes $R_{\oplus\ominus}$ bezüglich eines Aufzuges N der volle Bereich von 3 Halbrunden ab der momentanen Kabinenposition berücksichtigt wird.

3. Verfahren nach Anspruch 1,
dadurch gekennzeichnet,
dass die Bedienungsteilkosten ($K_1$....$K_n$), welche die durch eine Zielrufbedienung verursachten Verlustzeiten aller Fahrgäste darstellen, wie folgt berechnet werden:

$$K_{NRv} = [t_{P\oplus} \cdot k_1] + [t_{\oplus\ominus} \cdot k_1] + [t_{\triangle\oplus} \cdot k_2] + [t_{\triangle\ominus} \cdot k_3] + [t_{\triangle\oplus} \cdot k_4] + [t_{\triangle\ominus} \cdot k_5]$$

wobei bedeuten:

$t_{P\oplus}$ :Zeit, welche die Kabine benötigt, um von der momentanen Kabinenposition (P) zu einem neu zuzuteilenden (nzz) Zusteigehalt ($\oplus$) zu gelangen, inkl. Verzögerungen durch Zwischenhalte.

$t_{\oplus\ominus}$ :Fahrzeit der Kabine von einem nzz-Zusteigehalt ($\oplus$) zum entsprechenden neu zuzuteilenden (nzz)-Aussteigehalt ($\ominus$).

$t_{\triangle\oplus}$ :$\triangle$-Zeit (Verzögerungszeit) bei einem nzz-Zusteigehalt ($\oplus$).

$t_{\triangle\ominus}$ :$\triangle$-Zeit (Verzögerungszeit) bei einem nzz-Aussteigehalt ($\ominus$).

$k_1$ :die aus den Verkehrsverhältnissen ermittelte voraussichtliche Anzahl neuer Fahrgäste, die einem Zielruf ($R_{\oplus\ominus}$) zugeordnet sein werden, nämlich Zusteiger beim entsprechenden Zusteigehalt ($\oplus$), bzw. Aussteiger beim entsprechenden Aussteigehalt ($\ominus$).

$k_2$ :die aus den Verkehrsverhältnissen ermittelte voraussichtliche Anzahl Passagiere, die sich während eines nzz-Zusteigehaltes ($\oplus$) in der Kabine befinden werden (ohne Zusteiger $K_1$).

$k_3$ :die aus den Verkehrsverhältnissen ermittelte voraussichtliche Anzahl Passagiere, die sich während eines nzz-Aussteigehaltes ($\ominus$) in der Kabine befinden werden (ohne Aussteiger $K_1$).

$k_4$ :die Anzahl aller Zusteiger bei allen bereits zugeteilten (bzg)-Zusteigehalten ($\oplus$') hinter dem nzz-Zusteigehalt ($\oplus$).

$k_5$ :die Anzahl aller Zusteiger bei allen bzg-Zusteigehalten ($\oplus$') hinter dem nzz-Aussteigehalt ($\ominus$).

4. Verfahren nach Anspruch 1,
dadurch gekennzeichnet,
dass die Bonusfaktoren ($BF_1$....) und die Malusfaktoren ($MF_1$....) exponentiell oder in einer anderen, geeigneten mathematischen Funktion auf die Bedienungsteilkosten ($K_1$....$K_n$) der Bedienungskosten ($K_{NR}$) einwirken.

5. Verfahren nach Anspruch 1,
dadurch gekennzeichnet,
dass das Verkehrsaufkommen der Aufzugsgruppe als Betriebsparameter für die gruppenweise Variation der Bonusfaktoren ($BF_1$....) und der Malusfaktoren ($MF_1$....) vorgesehen ist, wobei deren numerischen Werte zwischen $BF_{min}$ bzw. $MF_{max}$ bei minimalem Verkehr und einem anderen Wert bei maximalem Verkehr nachgeführt werden.

6. Verfahren nach Anspruch 1,
dadurch gekennzeichnet,
dass die momentane Kabinenlast als Betriebsparameter für die aufzugsweise Variation der Bonusfaktoren ($BF_1$....) und der Malusfaktoren ($MF_1$....) vorgesehen ist, wobei deren numerische Werte zwischen $BF_{min}$ bzw. $MF_{max}$ bei minimaler Last und einem anderen Wert bei maximaler Last adaptiv nachgeführt werden.

7. Verfahren nach Anspruch 1,

dadurch gekennzeichnet,
dass die vollständige Trennung des Zusteige- und des Aussteigeverkehrs als erwünschte Funktion der Aufzugsgruppe mit einem variablen Zusteigekoinzidenz-Bonus $B_{\oplus\oplus}$ am Start und einem variablen Aussteigekoinzidenz-Bonus $B_{\ominus\ominus}$ am Ziel gefördert wird.

8. Verfahren nach Anspruch 1,
dadurch gekennzeichnet,
dass die Bildung von Fahrgästegruppen als erwünschte Funktion der Aufzugsgruppe mit einem variablen Gruppenbonus $B_G$ gefördert wird.

9. Verfahren nach Anspruch 1,
dadurch gekennzeichnet,
dass eine Abholfahrt in der dritten Halbrunde mit einem variablen Abholfahrt-Malus $M_F$ gegen weitere Rufzuteilungen geschützt wird.

10. Einrichtung zur Durchführung des Verfahrens nach Anspruch 1, mit auf den Stockwerken angeordneten Zehnertastaturen, mittels welchen Zielrufe für gewünschte Zielstockwerke eingegeben werden können, mit in den Kabinen der Aufzugsgruppe vorgesehenen Lastmesseinrichtungen, die mit Lastspeichern in Wirkverbindung stehen, mit jedem Aufzug der Gruppe zugeordneten, jeweils das Stockwerk eines möglichen Anhaltens anzeigenden Selektoren und mit einer Einrichtung, mittels welcher die eingegebenen Rufe den Kabinen der Aufzugsgruppe zugeteilt werden, wobei diese Einrichtung je Aufzug einen Rechner und eine Vergleichseinrichtung aufweist, ferner eine Türzeittabelle in der die Türöffnungs- und Türschliesszeiten gespeichert sind, eine Fahrzeittabelle, in welcher nach Aufwärts- und Abwärtsfahrtrichtung getrennt die Fahrzeiten zwischen jeweils einem bestimmten Stockwerk und jedem anderen Stockwerk gespeichert sind, ein Positionsregister, in welchem die momentane Kabinenposition gespeichert ist, sowie ein mit dem Rechner und der Vergleichseinrichtung verbundenes Kostenregister, gekennzeichnet durch,
einen Industrie-Computer (5), der über ein Kommunikations-Interface (CIF) mit Aufzugsgruppen, mit Aufzügen (A, B, C) und deren Kabinen (2), sowie mit Zehnertastaturen (13) auf Stockwerken ($E_1....E_{16}$) verbunden ist.

## Claims

1. Method for the immediate target call allocation in lift groups on the basis of operating costs and variable bonus and penalty point factors, in which method target calls to desired target call storeys can be entered by call-registering equipments arranged on the storeys, wherein these target calls are allocated immediately to the individual lifts of the lift group directly after call input by a superordinate target call allocation algorithm (ZZA) supported by a microprocessor and these allocations are indicated immediately on the call-registering equipments, wherein a subordinate costs computation algorithm (KBA) computes operating costs ($K_{NR}$), which are formed as multipart sum of partial operating costs ($K_1$ to $K_n$) and correspond to the waiting times and other lost times of passengers, from lift-related data for each lift and each target call, and wherein the operating costs of all lifts are then compared one with the other for each target call and a target call is immediately allocated definitively to that lift which displays the smallest corresponding operating costs ($K_{NR}$), characterised thereby,
   - that the function requirements, which form the basis of a target call allocation, on the serving of a call are ordered hierarchically and for this purpose divided into at least two groups, namely into higher ranking and lower ranking function requirements,
   - that the higher ranking function requirements are represented by partial operating costs ($K_1$ to $K_n$) and the lower ranking function requirements are each represented by a respective bonus factor ($BF_1...$) or a penalty point factor ($MF_1...$) in the costs computation for the computation of the operating costs ($K_{NR}$),
   - that the bonus factors ($BF_1...$) and the penalty point factors ($MF_1...$) act as multipliers on the partial operating costs ($K_1$ to $K_n$) forming a multipart sum of terms of a sum and multiplicatively modify at least one of these terms,
   - that the bonus factors ($BF_1....$) and the penalty point factors ($MF_1...$) each possess either a respective minimum value $0 < BF_{min} < 1$ or a respective maximum value $MF_{max} > 1$ in accordance with the weighting of the function requirements represented by them,

- that the numerical values of the bonus factors ($BF_1$ ...) and the penalty point factors ($MF_1$ ...) are variable, wherein they are made adaptively to follow an operational parameter of the lift group for each lift group and/or an operational parameter of the respective lift (N) for each lift (N) in the ranges $BF_{min} \leqq BF \leqq 1$ or $1 \leqq MF \leqq MF_{max}$.

2. Method according to claim 1, characterised thereby, that the complete range of 3 half-rounds from the instantaneous cage position is taken into consideration for the computation of the operating costs ($K_{NR}$) of a target call $R_{\oplus\ominus}$ in respect of a lift N.

3. Method according to claim 1, characterised thereby, that the partial operating costs ($K_1$ to $K_n$), which represent the lost times of all passengers caused by the serving of a target call, are computed as following:

$$K_{NRV} = [t_{P\oplus}°k_1] + [t_{\oplus\ominus}°k_1] + [t_{\Delta\oplus}°k_2] + [t_{\Delta\ominus}°k_3] + [t_{\Delta\oplus}°k_4] + [t_{\Delta\ominus}°k_5],$$

wherein

$t_{P\oplus}$     is the time needed by the cage to get from the instantaneous position (P) to a boarding stop ($\oplus$) to be newly allocated (nzz), including delays due to intermediate stops,

$t_{\oplus\ominus}$     is the travelling time from an nzz boarding stop ($\oplus$) to the corresponding (nzz) alighting stop ($\ominus$) to be newly allocated,

$t_{\Delta\oplus}$     s the $\Delta$-time (delay time) at an nzz boarding stop ($\oplus$),

$t_{\Delta\ominus}$     is the $\Delta$-time (delay time) at an nzz alighting stop ($\ominus$),

$k_1$     is the foreseeable number, ascertained from the traffic conditions, of new passengers which will be associated with a target call ($R_{\oplus\ominus}$), namely boarding passengers at the corresponding boarding stop ($\oplus$) or alighting passengers at the corresponding alighting stop ($\ominus$),

$k_2$     in the foreseeable number, ascertained from the traffic conditions, of passengers who will be in the cage during an nzz boarding stop ($\oplus$) (without boarding passengers $K_1$),

$k_3$     is the foreseeable number, ascertained from the traffic conditions, of passengers who will be in the cage during an nzz alighting stop ($\ominus$) (without alighting passengers k1),

$k_4$     is the number of all boarding passengers for all already allocated (bzg) boarding stops ($\oplus'$) behind the new boarding stop ($\oplus$) and

$k_5$     is the number of all boarding passengers for all (bzg) boarding stops ($\oplus'$) behind the nzz alighting stop ($\ominus$).

4. Method according to claim 1, characterised thereby, that the bonus factors ($BF_1$ ...) and the penalty point factors ($MF_1$ ...) act exponentially or in another suitable mathematical function on the partial operating costs ($K_1$ to $K_n$) of the operating costs ($K_{NR}$).

5. Method according to claim 1, characterised thereby, that the traffic volume of the lift group is provided as operational parameter for the groupwise variation of the bonus factors ($BF_1$ ...) and the penalty point factors ($MF_1$ ...), wherein their numerical values are made to follow respectively between $BF_{min}$ and $MF_{max}$ at minimum traffic and another value at maximum traffic.

6. Method according to claim 1, characterised thereby, that the instantaneous cage load is provided as operational parameter for the liftwise variation of the bonus factors ($BF_1$ ...) and the penalty point factors ($MF_1$ ...), wherein their numerical values are made to follow adaptively respectively between $BF_{min}$ and $MF_{max}$ at minimum load and another value at maximum load.

7. Method according to claim 1, characterised thereby, that the complete separation of the boarding traffic from the alighting traffic is promoted as desired function of the lift group by a variable boarding co-incidence bonus $B_{\oplus\oplus}$ at the start and a variable alighting co-incidence bonus $B_{\ominus\ominus}$ at the target.

8. Method according to claim 1, characterised thereby, that the formation of passenger groups is promoted as desired function of the lift group by a variable grouping bonus $B_g$.

9. Method according to claim 1, characterised thereby, that a picking-up trip in the third half round is protected against further call allocations by a variable picking-up trip penalty point $M_F$.

10. Equipment for the performance of the method according to claim 1, with decade keyboards, which are arranged on the storeys and by means of which target calls for desired storeys can be entered, with load-measuring equipments which are provided in the cages of the lift group and stand in effective connection with load memories, with selectors which are associated with each lift of the group and indicate each time the storey of a possible stop and with an equipment, by means of which the entered calls are allocated to the cages of the lift group, wherein this equipment displays a computer and a comparison equipment for each lift, with furthermore a door time table, in which the times of door opening and door closing are stored, a travel time table, in which the travelling times each time between a certain storey and each other storey are stored separately according to upward and downward direction of travel, a position register, in which the instantaneous cage position is stored, as well as a costs register connected with the computer and the comparison equipment, characterised by an industrial computer (5), which is connected by way of a communications interface (CIF) with lift groups, with lifts (A, B, C) and their cages (2) as well as with decade keyboards on storeys ($E_1$ to $E_{16}$).

**Revendications**

1. Procédé pour l'attribution immédiate d'appels de destination dans des groupes d'ascenseurs, basée sur des coûts de desserte et de facteurs bonus/malus variables, avec lesquels des appels à destination d'étages souhaités peuvent être entrés à l'aide de dispositifs d'enregistrement d'appels disposés aux étages, étant précisé que ces appels de destination sont attribués immédiatement après leur entrée aux différents ascenseurs du groupe à l'aide d'un algorithme d'attribution d'appels de destination (ZZA) prioritaire assisté par microprocesseur, et que ces attributions sont affichées immédiatement sur les dispositifs d'enregistrement d'appels, étant précisé également qu'un algorithme de calcul de coûts subordonné (KBA) calcule pour chaque ascenseur et pour chaque appel de destination, à partir de données spécifiques aux ascenseurs, des coûts de desserte ($K_{NR}$) correspondant aux temps d'attente et autres temps morts de passagers et conçus comme une somme composée de coûts partiels de desserte ($K_1...K_n$), et étant précisé que pour chaque appel de destination, les coûts de desserte de tous les ascenseurs sont alors comparés entre eux et qu'un appel de destination est attribué immédiatement et de façon définitive à l'ascenseur qui présente les coûts de desserte correspondants ($K_{NR}$) les plus faibles, caractérisé :
   - en ce que les exigences fonctionnelles concernant la desserte d'appels, sur lesquelles est basée une attribution d'appel de destination, sont classées hiérarchiquement et sont divisées à cet effet en au moins deux groupes : exigences fonctionnelles prioritaires et exigences fonctionnelles de second ordre,
   - en ce que, dans le calcul de coûts destiné à calculer les coûts de desserte ($K_{NR}$), les exigences fonctionnelles prioritaires sont représentées par des coûts partiels de desserte ($K_1....K_n$), et les exigences fonctionnelles de second ordre par un facteur de bonus ($BF_1....$) ou un facteur de malus ($MF_{1....}$),
   - en ce que les facteurs de bonus ($BF_1....$) et les facteurs de malus ($MF_{1...}$) agissent comme multiplicateurs sur les coûts partiels de desserte ($K_1....K_n$) définissant une somme de termes composée, et modifient par multiplication l'un au moins de ces termes,
   - en ce que les facteurs de bonus ($BF_1....$) et les facteurs de malus ($MF_{1...}$) ont respectivement, suivant la pondération des exigences fonctionnelles qu'ils représentent, une valeur minimale $0 < BF_{min} < 1$ et une valeur maximale $MF_{max} > 1$,
   - en ce que les valeurs numériques des facteurs de bonus ($BF_1....$) et des facteurs de malus ($MF_{1...}$) sont variables, étant précisé qu'elles sont restituées de façon adaptative pour chaque groupe d'ascenseurs suivant un paramètre de fonctionnement de celui-ci et/ou, pour chaque ascenseur (N), suivant un paramètre de fonctionnement de l'ascenseur (N) correspondant, dans les plages respectives $BF_{min} \leqq BF \leqq 1$ et $1 \leqq MF \leqq MF_{max}$.

2. Procédé selon la revendication 1, caractérisé en ce que, pour le calcul des coûts de desserte $K_{NR}$ d'un appel de destination $R_{\oplus\ominus}$ par rapport à un ascenseur N, la zone entière de 3 demi-rondes à partir de la position de cabine du moment est prise en compte.

3. Procédé selon la revendication 1, caractérisé en ce que les coûts partiels de desserte ($K_1....K_n$) qui représentent les temps morts causés pour tous les passagers par la desserte d'un appel de destination sont calculés de la façon suivante :
$$K_{NRv} = [t_{P\oplus}.k_1] + [t_{\oplus\ominus}.k_1] + [t_{\Delta\oplus}.k_2] + [t_{\Delta\ominus}k_3] + [t_{\Delta\oplus}.k_4] + [t_{\Delta\ominus}.k_5]$$
   $t_{p\oplus}$ désignant le temps nécessaire à la cabine pour arriver, à partir de la position de cabine du moment (P), à un arrêt d'entrée ($\oplus$) nouveau à attribuer (nzz), y compris les retards dus à des arrêts intermédiaires,
   $t_{\oplus\ominus}$ le temps de trajet de la cabine entre un arrêt d'entrée ($\oplus$) nzz et l'arrêt de sortie ($\ominus$) correspondant à attribuer (nzz),

$t_{\Delta\oplus}$      le temps $\Delta$ (temps de retard) à un arrêt d'entrée ($\oplus$) nzz,

$t_{\Delta\ominus}$      le temps $\Delta$ (temps de retard) à un arrêt de sortie ($\ominus$) nzz,

$k_1$      le nombre probable, calculé à partir des conditions de trafic, de nouveaux passagers qui seront associés à un appel de destination ($R_{\oplus\ominus}$), c'est-à-dire de personnes entrant à l'étage d'entrée ($\oplus$) correspondant ou de personnes sortant à l'étage de sortie ($\ominus$) correspondant,

$k_2$      le nombre probable, calculé à partir des conditions de trafic, de passagers qui se trouveront dans la cabine (sans les personnes entrant $K_1$) pendant un arrêt d'entrée ($\oplus$) nzz,

$k_3$      le nombre probable, calculé à partir des conditions de trafic, de passagers qui se trouveront dans la cabine (sans les personnes sortant $K_1$) pendant un arrêt de sortie ($\ominus$) nzz,

$k_4$      le nombre de toutes les personnes entrant à tous les arrêts d'entrée ($\oplus$') déjà attribués (bzg) en aval de l'arrêt d'entrée ($\oplus$) nzz, et

$k_5$      le nombre de toutes les personnes entrant à tous les arrêts d'entrée ($\oplus$') bzg en aval de l'arrêt de sortie ($\ominus$) nzz.

4.   Procédé selon la revendication 1, caractérisé en ce que les facteurs de bonus ($BF_1....$) et les facteurs de malus ($MF_{1...}$) agissent de façon exponentielle ou suivant une autre fonction mathématique appropriée, sur les coûts partiels de desserte ($K_1....K_n$) des coûts de desserte ($K_{NR}$).

5.   Procédé selon la revendication 1, caractérisé en ce que la circulation du groupe d'ascenseurs est prévue comme paramètre de fonctionnement pour la variation par groupe des facteurs de bonus ($BF_1....$) et des facteurs de malus ($MF_{1...}$), les valeurs numériques de ceux-ci situées entre $BF_{min}$ ou $MF_{max}$, dans le cas d'un trafic minimal, et une autre valeur dans le cas d'un trafic maximal, étant restituées.

6.   Procédé selon la revendication 1, caractérisé en ce que la charge de cabine du moment est prévue comme paramètre de fonctionnement pour la variation par ascenseur des facteurs de bonus ($BF_1....$) et des facteurs de malus ($MF_{1...}$), les valeurs numériques de ceux-ci situées entre $BF_{min}$ ou $MF_{max}$, dans le cas d'une charge minimale, et une autre valeur dans le cas d'une charge maximale, étant restituées de façon adaptative.

7.   Procédé selon la revendication 1, caractérisé en ce que la séparation complète du trafic d'entrée et du trafic de sortie est favorisée comme fonction souhaitable du groupe d'ascenseurs, avec un bonus de coïncidence d'entrée variable $B_{\oplus\oplus}$ au niveau du départ, et un bonus de coïncidence de sortie variable $B_{\ominus\ominus}$ au niveau de la destination.

8.   Procédé selon la revendication 1, caractérisé en ce que la formation de groupes de passagers est favorisée comme fonction souhaitable du groupe d'ascenseurs, avec un bonus de groupe $B_G$ variable.

9.   Procédé selon la revendication 1, caractérisé en ce qu'un trajet pour aller chercher un passager dans la troisième demi-ronde est protégé à l'encontre d'attributions d'appels supplémentaires à l'aide d'un malus de trajet d'enlèvement $M_F$ variable.

10.   Dispositif pour la mise en oeuvre du procédé selon la revendication 1, comprenant des claviers décimaux disposés aux étages et permettant d'entrer des appels à destination d'étages souhaités, des dispositifs de mesure de charge prévus dans les cabines du groupe d'ascenseurs et en relation fonctionnelle avec les mémoires de charges, des sélecteurs associés à chaque ascenseur du groupe et indiquant l'étage d'un arrêt possible, et un dispositif à l'aide duquel les appels entrés sont attribués aux cabines du groupe d'ascenseurs, étant précisé que ce dispositif comporte, pour chaque ascenseur, un calculateur et un dispositif comparateur, un tableau de temps de portes dans lequel sont mis en mémoire les temps d'ouverture et de fermeture de portes, un tableau de temps de trajets dans lequel sont mis en mémoire, séparément selon le sens de trajet ascendant et descendant, les temps de trajets entre un étage défini et chaque autre étage, un registre de position dans lequel est mise en mémoire la position de cabine du moment, ainsi qu'un registre de coûts relié au calculateur et au dispositif comparateur, caractérisé par un ordinateur industriel (5) qui est relié, par l'intermédiaire d'une interface de communication (CIF), à des groupes d'ascenseurs, à des ascenseurs (A, B, C) et à leurs cabines (2), ainsi qu'à des claviers décimaux (13) prévus aux étages ($E_1....E_{16}$).

# Fig.1

EP 0 443 188 B1

# Fig.2

# Fig.4

13

# Fig. 3

START

SR1 — ERSTER ZIELRUF $R_{\theta\theta}$ IN SEQUENZ

NÄCHSTER ZIELRUF $R_{\theta\theta}$ IN SEQUENZ

ORDNE FUNKTIONSANFORDERUNGEN AN ZIELRUFBEDIENUNG IN ZWEI GRUPPEN: — SR2
- vorrangige Funktionsanforderungen
- nachrangige Funktionsanforderungen

SR3

**NACHFÜHRUNGS-ALGORITHMUS (NFA)**

BESTIMME BONUS-/MALUS-FAKTOREN $BF_1$..../$MF_1$.... FÜR NACHRANGIGE FUNKTIONSANFORDERUNGEN

PARAMETER FÜR ADAPTIVE NACHFÜHRUNG DER BONUS-/MALUS-FAKTOREN ?

AUFZUG

AUFZUGSGRUPPE

NACHFÜHRUNG $BF_1$..../$MF_1$.... NACH MOM. KABINENLAST

NACHFÜHRUNG $BF_1$..../$MF_1$.... NACH VERKEHRSAUFKOMMEN

**KOSTEN-BERECHN.-ALGORITHMUS (KBA)**

BERECHNE $K_{NR}$ FÜR ALLE $AUFZÜGE_N$, NACH FORMEL;

$$K_{NR} = \{[BF_1....] \cdot [MF_1....]\}$$

$$\{[t_{P\theta} \cdot k_1] + [t_{\theta\theta} \cdot k_1] + [t_{\Delta\theta} \cdot k_2] + [t_{\Delta\theta} \cdot k_3] + [t_{\Delta\theta} \cdot k_4] + [t_{\Delta\theta} \cdot k_5]\}$$

SR4

SR5 — ZUTEILUNG EINES ZIELRUFES $R_{\theta\theta}$ AN AUFZUG MIT $K_{NR\ min}$

SR6 — SOFORTANZEIGE DER ZIELRUFZUTEILUNG AUF ZEHNERTASTATUR